# EUROPÄISCHE PATENTANMELDUNG

(11) **EP 3 106 266 A1**
(43) Veröffentlichungstag der Anmeldung: **21.12.2016**
(21) Anmeldenummer: 15172462.2
(22) Anmeldetag: 17.06.2015
(51) Int. Cl.: B25F 5/00, H02H 11/00

(54) **STEUERUNGSVERFAHREN FÜR EINE ELEKTRISCHE WERKZEUGMASCHINE**

(71) Anmelder: HILTI Aktiengesellschaft, 9494 Schaan (LI)
(72) Erfinder: Mößnang, Franz, 86391 Stadtbergen (DE); Kock, Laurent-Sebastian, 85586 Poing (DE); Neuper, Karl, 6832 Roethis (AT)
(74) Vertreter: Hilti Aktiengesellschaft Corporate Intellectual Property

(57) **Zusammenfassung**

Eine Werkzeugmaschine 1 hat einen Werkzeughalter 4, einen Elektromotor 5 zum rotierenden Antreiben des Werkzeughalters 4. Einen Handgriff 8 zum Führen der Werkzeugmaschine 1 im Betrieb. Einen Hauptschalter 9 zum Einschalten des Elektromotors 5. Die Werkzeugmaschine 1 führt folgendes Steuerungsverfahren aus. Der Hauptschalter 9 wird abgetastet, ob er betätigt ist. Eine Anlaufsperre 13 übermittelt an eine Motorsteuerung 12 ein Sperrsignal 16, wenn vor Anschließen der Werkzeugmaschine 1 an die Stromversorgung 10 der Hauptschalter 9 betätigt ist. Eine Freischaltung 19 empfängt Signale 26 einer von der elektrischen Werkzeugmaschine 1 getrennten Steuereinheit 22, vergleicht die empfangenen Signale 26 mit einer vorgegebenen Signatur und übermittelt ein Freigabesignal 20 an die Motorsteuerung 12, wenn das empfangene Signal 26 mit der vorgegebenen Signatur übereinstimmt. Die Motorsteuerung 12 schaltet den Elektromotor 5 ansprechend auf das Betätigen des Hauptschalters 9 ein, unter der zusätzlichen Bedingung dass die Anlaufsperre 13 kein Sperrsignal 16 übermittelt oder die Freischaltung 19 ein Freigabesignal 20 übermittelt.

## Beschreibung

### GEBIET DER ERFINDUNG

Die vorliegende Erfindung betrifft ein Steuerungsverfahren für eine elektrische, handgehaltene Werkzeugmaschine.

Handgehaltene Werkzeugmaschinen sind mit einer Anlaufsperre versehen, wie aus der US 2012 306291 A1 bekannt. Die Anlaufsperre verhindert, dass die Werkzeugmaschine beim Einstecken der Netzversorgung bei gedrücktem Hauptschalter anläuft.

### OFFENBARUNG DER ERFINDUNG

Die erfindungsgemäße Werkzeugmaschine hat einen Werkzeughalter, einen Elektromotor zum rotierenden Antreiben des Werkzeughalters, einen Handgriff zum Führen der Werkzeugmaschine im Betrieb, einen Hauptschalter zum Einschalten des Elektromotors. Die Werkzeugmaschine führt folgendes Steuerungsverfahren aus. Der Hauptschalter wird abgetastet, ob er betätigt ist. Eine Anlaufsperre übermittelt an eine Motorsteuerung ein Sperrsignal, wenn vor Anschließen der Werkzeugmaschine an die Stromversorgung der Hauptschalter betätigt ist. Eine Freischaltung empfängt Signale einer von der elektrischen Werkzeugmaschine getrennten Steuereinheit, vergleicht die empfangenen Signale mit einer vorgegebenen Signatur und übermittelt ein Freigabesignal an die Motorsteuerung, wenn das empfangene Signal mit der vorgegebenen Signatur übereinstimmt. Die Motorsteuerung schaltet den Elektromotor ansprechend auf das Betätigen des Hauptschalters ein, unter der zusätzlichen Bedingung dass die Anlaufsperre kein Sperrsignal übermittelt oder die Freischaltung ein Freigabesignal übermittelt.

Die Werkzeugmaschine schützt den Anwender zuverlässig vor einem versehentlichen Anlaufen, das insbesondere beim Einstecken eines Netzsteckers der Werkzeugmaschine auftreten kann. Die Werkzeugmaschine kann auch ferngesteuert ein- und ausgeschaltet werden, indem die Anlaufsperre durch ein entsprechend codiertes Signal ausgeschaltet wird.

### KURZE BESCHREIBUNG DER FIGUREN

Die nachfolgende Beschreibung erläutert die Erfindung anhand von exemplarischen Ausführungsformen und Figuren. In den Figuren zeigen:

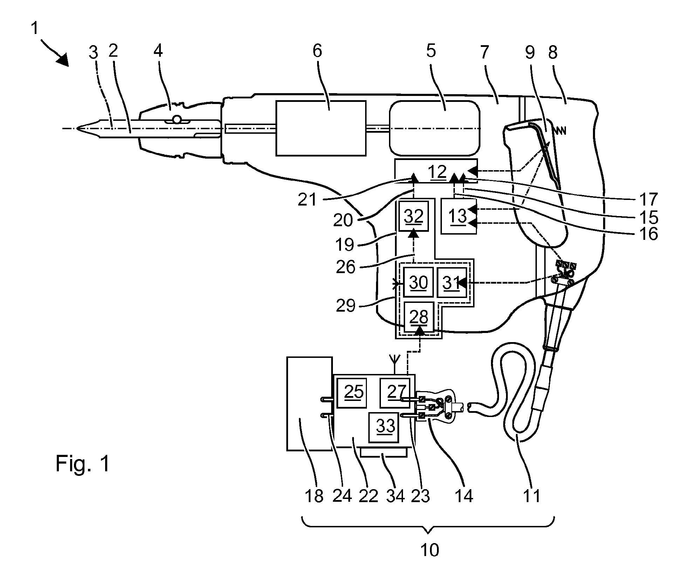

Fig. 1 eine elektrische Bohrmaschine

### AUSFÜHRUNGSFORMEN DER ERFINDUNG

Fig. 1 zeigt eine elektrische Bohrmaschine **1** als Beispiel für elektrische handgehaltene Werkzeugmaschinen mit einem rotierenden Werkzeug **2.** Die elektrische Bohrmaschine **1** hat einen um eine Arbeitsachse **3** rotierenden Werkzeughalter **4** zum Aufnehmen eines Werkzeugs **2.** Das Werkzeug **2** kann ein Bohrer, ein Schrauberbit, ein Schleifkopf etc. sein. Der Werkzeughalter **4** ist mit einem Elektromotor **5** gekoppelt, welcher den Werkzeughalter **4** um die Arbeitsachse **3** rotierend antreiben kann. Der Elektromotor **5** ist neben anderen Komponenten eines Antriebsstrangs **6,** z.B. einem Getriebe, einer Rutschkupplung, in einem Maschinengehäuse **7** angeordnet. Ein Handgriff **8** an dem Maschinengehäuse **7** ermöglicht dem Anwender die elektrische Bohrmaschine **1** während des Betriebs zu halten und zu führen. Ein Hauptschalter **9** ist an oder in der Nähe des Handgriffs **8** vorgesehen, über welchen der Elektromotor **5** ein- und ausschaltbar ist. Eine Stromversorgung **10** der elektrischen Bohrmaschine **1** erfolgt über eine Netzleitung **11.** Andere gleichartige, rotierende, handgehaltene Werkzeugmaschinen sind unter anderem ein Elektroschrauber, ein Trennschleifer und eine Kreissäge.

Der Elektromotor **5** wird von einer Motorsteuerung **12** angesteuert. Die Motorsteuerung **12** tastet den Hauptschalter **9** ab. Der Hauptschalter **9** ist im einfachsten Fall ein monostabiler, elektrischer Taster, der in einer Grundstellung elektrische Kontakte öffnet und einer betätigten Stellung die elektrischen Kontakte schließt. Der elektrische Taster kann ein binäres Signal ausgeben, welches nur zwischen der Grundstellung der betätigten Stellung unterscheidet. Alternativ kann der Taster ein kontinuierliches oder codiertes Signal ausgeben, welches Aufschluss über die Andruckkraft auf den Taster oder den Betätigungsweg des Tasters ermöglicht. Beispielsweise enthält der Taster eine elektrische Schleifbahn auf der ein Kontakt gleitet, wodurch sich in Abhängigkeit des Betätigungswegs des Kontakts ein veränderlicher Widerstandswert ergibt. Eine Feder setzt den Taster in die Grundstellung, wenn der Hauptschalter **9** unbetätigt ist. Vorteilhafterweise versorgt die Motorsteuerung **12** den Elektromotor **5** mit Strom, wenn der Hauptschalter **9** in der gedrückten Stellung mit den geschlossenen Kontakten ist, und die Motorsteuerung **12** trennt den Elektromotor **5** von der Stromversorgung **10,** wenn der Hauptschalter **9** in der Grundstellung mit den geöffneten Kontakten ist.

Die Motorsteuerung **12** enthält eine Anlaufsperre **13,** die ein unbeabsichtigtes Anlaufen des Elektromotors **5** verhindert. Ein unbeabsichtigtes Anlaufen könnte sich ereignen, wenn der Anwender den Netzstecker **14** der Bohrmaschine **1** in die Steckdose steckt und der Hauptschalter **9** in der gedrückten Stellung blockiert ist. Der Anwender hat hierbei typischerweise die Bohrmaschine **1** nur nachlässig in der Hand, wodurch das rotierende Werkzeug **2** ihn unmittelbar oder mittelbar verletzten kann.

Die Anlaufsperre **13** ermittelt die zeitliche Reihenfolge zweier Ereignisse, nämlich des Bereitstellens der Energieversorgung und des Betätigens des Hauptschalters **9.** Die Anlaufsperre **13** gibt ein Entsperrsignal **15** aus, wenn der Hauptschalter **9** betätigt wird, nachdem die Stromversorgung **10** bereitgestellt ist. Die Anlaufsperre **13** gibt ein Sperrsignal **16** aus, wenn der Hauptschalter **9** bereits betätigt ist, bevor die Stromversorgung **10** bereitgestellt wird. Die Anlaufsperre **13** wechselt von dem Sperrsignal **16** zu dem Entsperrsignal **15,** wenn bei bestehender Stromversorgung **10** der Hauptschalter **9** gelöst wird. Die Motorsteuerung **12** empfängt an einem Eingang **17,** die von der Anlaufsperre **13** ausgegebenen Signale. Liegt das Entsperrsignal **15** an, startet die Motorsteuerung **12** den Elektromotor **5** entsprechend dem gedrückten Hauptschalter **9.** Liegt das Sperrsignal **16** an, hält die Motorsteuerung **12** den Elektromotor **5** von der Stromversorgung **10** getrennt. Falls die Motorsteuerung **12** kein Signal an dem Eingang **17** empfängt, wird vorsorglich der Elektromotor **5** ebenfalls von der Stromversorgung **10** getrennt gehalten.

Die Anlaufsperre **13** hat beispielsweise ein Register, das bei fehlender oder nicht ausreichender Stromversorgung **10** der elektrischen Bohrmaschine **1** automatisch auf einen Nullwert fällt. Das Register ist beispielsweise ein kleiner Kondensator, der sich über einen Widerstand entlädt. Das Register wird auf einen Einswert gesetzt und gehalten, nachdem die Anlaufsperre **13** für eine Mindestdauer mit Strom versorgt ist. Das Register wird jedoch nur auf den Einswert gesetzt, wenn der Hauptschalter **9** in der unbetätigten Grundstellung ist. Die Anlaufsperre **13** gibt das Sperrsignal **16** bei dem Nullwert und das Entsperrsignal **15** bei dem Einswert aus.

Aus Sicht des Anwenders lässt sich die Bohrmaschine **1** nicht starten, wenn beim Einstecken des Netzsteckers **14** bereits der Hauptschalter **9** gedrückt ist. Nach einem Loslassen des Hauptschalters **9** und erneuten Betätigen startet die Bohrmaschine **1.** Im Regelfall bemerkt der Anwender die Anlaufsperre **13** nicht, da typischerweise zuerst der Netzstecker **14** in eine Steckdose **18** gesteckt wird, um die Stromversorgung **10** bereitzustellen, bevor der Anwender die Bohrmaschine **1** in die Hand nimmt und den Hauptschalter **9** betätigt.

Die Motorsteuerung **12** ist mit einer Freischaltung **19** versehen. Die Freischaltung **19** hat im inaktiven Zustand keinen Einfluss auf die Motorsteuerung **12** und die Anlaufsperre **13.** Die Freischaltung **19** überbrückt in einem aktiven Zustand die Anlaufsperre **13.** Die Motorsteuerung **12** verbindet den Elektromotor **5** mit der Stromversorgung **10** unabhängig von der Reihenfolge der zwei Ereignisse: Bereitstellen der Energieversorgung und Betätigen des Hauptschalters **9.** Die Freischaltung **19** gibt beispielsweise im aktiven Zustand ein Freigabesignal **20** aus, welches dem Eingang **21** der Motorsteuerung **12** zugeführt wird. Das Freigabesignal **20** der Freischaltung **19** und das Entsperrsignal **15** der Anlaufsperre **13** sind gleich. Die Motorsteuerung **12** unterscheidet die beiden Signale nicht und startet entsprechend den Elektromotor **5** bei betätigtem Hauptschalter **9.** Die elektrische Bohrmaschine **1** kann nun durch externes Ab- und Zuschalten der Stromversorgung **10** ein- und ausgeschaltet werden. Dies ist beispielsweise hilfreich, wenn die Bohrmaschine **1** in einem Bohrständer gehaltert ist. Falls ein Sperrsignal **16** der Anlaufsperre **13** an der Motorsteuerung **12** anliegt, kann die Motorsteuerung **12** regelmäßig prüfen, ob ein Freigabesignal **20** an dem Eingang **21** anliegt. Das Freigabesignal **20** kann verzögert zu dem Sperrsignal **16** übermittelt werden, z.B. um nach einem Bereitstellen eines Versorgungsstroms andere Aktionen auszuführen, bevor sich der Elektromotor 5 der Bohrmaschine **1** dreht. Vorzugsweise wird das Freigabesignal **20** erst mit dem Abfall der Stromversorgung **10** zurückgesetzt.

Die Freischaltung **19** kommuniziert mit einer externen Steuereinheit **22.** Die Steuereinheit **22** ist beispielsweise als ein Steckmodul ausgebildet, das in den Stromversorgungspfad **10** der Bohrmaschine **1** geschaltet werden kann. Die Steuereinheit **22** hat beispielsweise eine Steckdose **23,** in welche der Netzstecker **14** der Bohrmaschine **1** gesteckt werden kann, und einen Stecker **24,** der einem Netzstecker nachempfunden in eine Steckdose **18** gesteckt werden kann. Die Steuereinheit **22** hat beispielsweise einen Spannungssensor **25,** welcher das Anliegen einer Spannung in der Stromversorgung **10** erfasst. Die Steuereinheit **22** sendet aktiv ein Signal **26** mit einer Sendeeinheit **27,** wenn eine Spannung anliegt. Die Sendeeinheit **27** kann ein Funksender sein, welcher das Signal **26** drahtlos übermittelt. Alternativ kann die Sendeeinheit **27** das Signal **26** auf den Versorgungsstrom modulieren. Ferner kann die Sendeeinheit **27** eine gesonderte kabelgebundene Verbindung mit der Bohrmaschine **1** aufweisen, welche beispielsweise in eine Steckverbindung **28** an dem Maschinengehäuse **7** gesteckt wird. Das Signal **26** enthält einen wenigstens einen Freischaltcode. Die Freischaltung **19** enthält einen Empfänger **29,** der das Signal **26** empfängt. Der Empfänger **29** enthält je nach der vorgesehen Sendeeinheit **27** einen Funkempfänger **30,** einen den Versorgungsstrom demodulierenden Demodulator **31** und/oder einen Steckverbindung **28** an dem Maschinengehäuse **7** auf. Der Empfänger **29** leitet das Signal **26** an einen Decoder **32** weiter. Der Decoder **32** vergleicht das Signal **26** mit einem Freischaltcode. Falls der Freischaltcode in dem Signal **26** enthalten ist, gibt der Decoder **32** das Freigabesignal **20** an die Motorsteuerung **12** aus. Alternativ sendet die Steuereinheit **22** ein Anfragesignal, sobald der Netzstecker **14** eingesteckt und eine Stromversorgung **10** der Bohrmaschine 1 etabliert ist. Die Steuereinheit **22** antwortet auf das Anfragesignal mit einem den Freischaltcode enthaltenden Signal **26.**

Die externe Steuereinheit **22** kann zusätzlich zu dem Freischaltcode einen oder mehrere Steuerungscodes übermitteln, welche in einem Speicher **33** hinterlegt sind. Der Steuerungscode enthält beispielsweise Instruktionen mit welcher Drehzahl die Bohrmaschine **1** laufen soll oder mit welcher Drehbeschleunigung die Bohrmaschine **1** anlaufen soll oder welches maximale Drehmoment die Bohrmaschine **1** aufbringen soll. Die Steuerungscodes können beispielsweise dauerhaft in dem Speicher **33** hinterlegt sein und durch einen Wahlschalter **34** oder ein analoges Eingabefeld an der Steuereinheit **22** ausgewählt oder eingegeben werden können. Die Freischaltung **19** decodiert die übermittelten Steuerungscodes mittels des Decoders **32.** Der Decoder **32** leitet entsprechende Steuerungssignale an die Motorsteuerung **12** weiter, die ansprechend auf die Steuerungssignale die Drehzahl einstellt, die Drehbeschleunigung limitiert bzw. das Drehmoment begrenzt.

## Patentansprüche

1. Steuerungsverfahren für eine elektrische Werkzeugmaschine mit den Schritten:
Abtasten, ob ein Hauptschalter (9) betätigt ist,
Übermitteln eines Sperrsignals (16) an eine Motorsteuerung (12) durch eine Anlaufsperre (13), wenn vor Anschließen der Werkzeugmaschine (1) an die Stromversorgung (9) der Hauptschalter (8) betätigt ist,
Empfangen von Signalen (26) einer von der elektrischen Werkzeugmaschine (1) getrennten Steuereinheit (24),
Vergleichen der empfangenen Signale (22) mit einem Freischaltcode,
Übermitteln eines Freigabesignals (18) an die Motorsteuerung (11), wenn das empfangene Signal (26) mit dem Freischaltcode übereinstimmt,
Einschalten eines Elektromotors (5) der elektrischen Werkzeugmaschine (1) durch die Motorsteuerung (12) ansprechend auf das Betätigen des Hauptschalters (9), wenn die Anlaufsperre (12) kein Sperrsignal (15) übermittelt oder wenn die Freischaltung (17) ein Freigabesignal (18) übermittelt.

2. Steuerungsverfahren nach Anspruch 1 **dadurch gekennzeichnet, dass** die Steuereinheit (22) das Signal (26) mit dem Freischaltcode drahtlos übermittelt.

3. Steuerungsverfahren nach Anspruch 1 oder 2, **dadurch kennzeichnet, dass** das Signal (26) mit dem Freischaltcode drahtlos empfangen wird.

4. Steuerungsverfahren nach Anspruch 1 bis 3, **dadurch gekennzeichnet, dass** die Steuereinheit (22) mit dem Freischaltcode wenigstens einen Steuercode übermittelt und die Motorsteuerung (12) basierend auf dem Steuercode eine Drehzahl, eine Drehbeschleunigung und/oder ein Drehmoment einstellt.

5. Elektrische Werkzeugmaschine (1) mit einem Maschinengehäuse (7), an dem ein Handgriff (8) zum Führen der Werkzeugmaschine (1) im Betrieb vorgesehen ist,
einem Werkzeughalter (4) zum Haltern eines Werkzeugs (2) auf einer Arbeitsachse (3), einem Elektromotor (5), einem Werkzeughalter (4), der durch den Elektromotor (5) um eine Arbeitsachse (3) rotierend angetrieben ist, einer Motorsteuerung (12),
einem Hauptschalter (9) zum Betätigung durch den Anwender,
einem Anschluss (14) zum Verbinden der elektrischen Werkzeugmaschine (1) mit einer Stromversorgung (10),
einer Anlaufsperre (13), die ein Sperrsignal (16) an die Motorsteuerung (12) übermittelt, wenn vor Anschließen der Werkzeugmaschine (1) an die Stromversorgung (10) der Hauptschalter (9) betätigt ist,
eine Freischaltung (19), die einen Empfänger (29) zum Empfangen von Signalen (26) einer von der elektrischen Werkzeugmaschine (1) getrennte Steuereinheit (22) und einen Decoder (32) zum Vergleichen eines empfangenen Signals (26) mit einem Freischaltcode aufweist und die ein Freigabesignal (20) an die Motorsteuerung (12) bei Übereinstimmen des empfangenen Signals mit dem Freischaltcode übermittelt,
wobei die Motorsteuerung (12) ansprechend auf ein Betätigen des Hauptschalters (9) den Elektromotor (5) einschaltet, wenn die Anlaufsperre (13) kein Sperrsignal (16) übermittelt oder wenn die Freischaltung (19) ein Freigabesignal (20) übermittelt.

6. Elektrische Werkzeugmaschine (1) nach Anspruch 5, **dadurch gekennzeichnet, dass** der Empfänger (29) einen Funkempfänger (30), einen Demodulator (31) zum Extrahieren von auf die Stromversorgung (10) aufgeprägter Signale (26) oder eine Steckverbindung (28) an der Außenseite des Maschinengehäuses (7) aufweist.

7. Elektrische Werkzeugmaschine (1) nach Anspruch 5 oder 6, **dadurch gekennzeichnet, dass** die getrennte Steuereinheit (22) einen Speicher (33) mit hinterlegten Steuercodes aufweist, wobei die Motorsteuerung (12) ansprechend auf einen von der Steuereinheit (22) übermittelten Steuercode die Drehzahl, die Drehbeschleunigung und/oder das Drehmoment einstellt.
